# EUROPÄISCHE PATENTSCHRIFT

(11) **EP 4 565 860 B1**
(45) Veröffentlichungstag und Bekanntmachung des Hinweises auf die Patenterteilung: **27.05.2026**
(21) Anmeldenummer: 23748787.1
(22) Anmeldetag: 28.07.2023
(51) Int. Cl.: G01L 9/00, G01L 19/00, G01L 19/06, G01L 19/14, G01L 13/02

(54) **DRUCKMESSGERÄT ZUM EINSATZ IN EINER EXPLOSIONSGEFÄHRDETEN UMGEBUNG**
PRESSURE MEASUREMENT DEVICE FOR USE IN A POTENTIALLY EXPLOSIVE ENVIRONMENT
DISPOSITIF DE MESURE DE PRESSION POUR UTILISATION DANS UN ENVIRONNEMENT POTENTIELLEMENT EXPLOSIF

(30) Priorität: 03.08.2022 DE 102022119493
(43) Veröffentlichungstag der Anmeldung: 11.06.2025
(73) Patentinhaber: ifm electronic gmbh, 45128 Essen (DE)
(72) Erfinder: HALBINGER, Lorenz, 88353 Kißlegg (DE); KUNA, Tobias, 88285 Bodnegg (DE); KNOLL, Guido, 88239 Wangen (DE)
(74) Vertreter: Ifm Patentabteilung
(86) Internationale Anmeldenummer: PCT/EP2023/071071
(87) Internationale Veröffentlichungsnummer: WO 2024/028236

(56) Entgegenhaltungen:
- US-A- 5 287 746
- US-A1- 2005 172 738
- US-A1- 2022 099 516

## Beschreibung

Die Erfindung betrifft ein Druckmessgerät zur Erfassung des Drucks eines Mediums innerhalb eines Behälters oder einer Rohrleitung in einer explosionsgefährdeten Umgebung.

Druckmessgeräte bzw. Drucksensoren werden in vielen Industriebereichen zur Druckmessung eingesetzt. Sie bestehen im Wesentlichen aus einem Prozessanschluss und einem Gehäuse. Der Prozessanschluss dient dazu, das Messgerät mit dem das zu messende Medium beinhaltenden Behälter zu verbinden und eine Druckmesszelle als Messwandler für den Prozessdruck, z. B. eine piezoresistive oder kapazitive Messzelle, aufzunehmen. Das Gehäuse enthält eine Auswerteelektronik zur Signalverarbeitung und weist einen Steckeranschluss auf, über den das Messgerät mit Energie versorgt wird und über den die erzeugten Messsignale zur weiteren Verarbeitung in einer übergeordneten Steuereinheit, bspw. in einer SPS, abgegriffen werden können.

Kapazitive Messzellen bestehen aus einer kompakten Einheit mit einem keramischen Grundkörper und einer Membran, wobei zwischen dem Grundkörper und der Membran ein Abstandsring, bspw. als Glaslotring ausgeführt, angeordnet ist. Der sich dadurch ergebende Hohlraum zwischen Grundkörper und Membran ermöglicht die längsgerichtete Beweglichkeit der Membran infolge eines Druckeinflusses. An der Unterseite der Membran und an der gegenüberliegenden Oberseite des Grundkörpers sind jeweils Elektroden vorgesehen, die zusammen einen Messkondensator bilden. Durch Druckeinwirkung kommt es zu einer Verformung der Membran, was eine Kapazitätsänderung des Messkondensators zur Folge hat.

Besondere Anforderungen werden an Druckmessgeräte gestellt, die für den Einsatz in einer explosionsgefährdeten Umgebung vorgesehen sind. Hierfür sind unter der Bezeichnung ATEX - abgeleitet aus der französischen Bezeichnung für explosionsfähige Atmosphären: ATmosphères Explosibles - Richtlinien erlassen worden, die das Inverkehrbringen explosionsgeschützter elektrischer und mechanischer Geräte, Komponenten und Schutzsysteme regeln. Ein Beispiel für ein entsprechendes Druckmessgerät offenbart die EP 2913651 B1.

Ein wesentlicher Bestandteil dieser Richtlinien ist das Definieren von Zonen, durch bestimmte Gefahrenbereiche definiert sind. Daraus leitet sich dann eine strikte und definierte Abgrenzung zwischen den einzelnen Zonen ab, d.h. wenn mit einem eingangs genannten Druckmessgerät ein Druck innerhalb einer explosionsgefährdeten Umgebung gemessen werden soll, hat das Messgerät einerseits Berührung mit dem kritischen Gefahrenbereich und andererseits befinden sich aber auch Teile des Messgeräts außerhalb der kritischen Zone. D.h. innerhalb des Messgeräts selbst erfolgt wenigstens ein Übergang von einer Zone zu einer anderen, was vor allem bei Relativdruckmessgeräten eine Herausforderung darstellt, da mittels eines Luftdurchgangs ein Druckausgleich von der Messzelle zur Atmosphäre gegeben sein muss. Dafür braucht es konstruktive Maßnahmen, durch die diese Trennung den Richtlinien entsprechend realisiert wird.

Das Dokument US 5,287,746 A offenbart einen modularen Druckmessumformer mit einem flammhemmenden Kopfteil. Das Kopfteil weist einen Durchgang mit einem zweiten, flammhemmenden Abschnitt auf, der als langer, enger Kanal ausgebildet ist. Dieser Kanal verläuft durch einen monolithischen Teil des Kopfteils und soll eine Flammenausbreitung zwischen dem Prozessfluid und dem Inneren des Messumformers verhindern.

Das Dokument US 2005/0172738 A1 offenbart eine Prozessdichtung für einen Messumformer sowie ein Verfahren zu deren Befestigung. Um durch Schweißverzug verursachte Messfehler zu vermeiden, wird der Dichtring während des Anschweißens an das Gehäuse vorgespannt. Dadurch wird sichergestellt, dass eine innere ringförmige Schulter der Dichtung auch im unbelasteten, montierten Zustand in Kontakt mit der Trennmembran verbleibt und so die Einleitung von Spannungen bei der Montage reduziert wird.

Das Dokument US 2022/0099516 A1 offenbart eine Gehäuseanordnung für ein Feldgerät, die eine explosionssichere Montage eines transparenten Fensters ohne den Einsatz von Vergussmasse ermöglicht. Die Anordnung verwendet einen Haltering, der in den Gehäusedeckel eingeschraubt wird, um das transparente Fenster gegen einen Flansch des Deckels zu klemmen. Durch diese rein mechanische Klemmung wird ein mehrstufiger, gewundener Flammenpfad zwischen den Bauteilen gebildet, der die Anforderungen an den Explosionsschutz erfüllt.

Aufgabe der Erfindung ist es, ein Druckmessgerät vorzuschlagen, bei dem auf einfache Weise eine Zonentrennung und damit eine Richtlinien-konforme Abgrenzung zu einem Gefahrenbereich realisiert wird.

Die Aufgabe wird erfindungsgemäß durch ein Druckmessgerät mit den Merkmalen des Anspruchs 1 oder des Anspruchs 2 gelöst. Vorteilhafte Ausgestaltungen der Erfindung sind in den Unteransprüchen angegeben.

Die Erfindung geht von einem Druckmessgerät mit einer Druckmesszelle aus, die in einem Prozessanschluss angeordnet ist. Die Druckmesszelle ist bevorzugt als kapazitive Druckmesszelle ausgebildet, ist aus einem keramischen Werkstoff hergestellt und besteht aus einem Grundkörper und einer Membran. Neben kapazitiven Druckmesszellen umfasst die Erfindung auch piezoresistive Druckmesszellen.

Vorzugsweise wird die Druckmesszelle in dem Prozessanschluss zwischen einem prozessseitig angeordneten Halteelement und einem auf dem Grundkörper aufliegenden Gewindering axial eingespannt. Das Halteelement ist dabei als ein umlaufender, nach innen gerichteter metallischer Dichtsteg ausgeführt, welcher vorzugsweise federelastische Eigenschaften aufweist. Vorteilhafterweise ist zwischen dem nach innen ragendem Bereich des Haltelements und der Druckmesszelle bzw. der Membran ein Dichtelement angeordnet ist, um ein Eindringen des Messmediums in den Innenraum des Messgeräts zu verhindern.

Kern der Erfindung ist die Erkenntnis, dass die gemäß der ATEX-Richtlinien notwendige Zonentrennung, insbesondere zwischen der Zone 0 und der Zone 1, durch eine Trennwand realisiert wird, die ein Außengewinde aufweist und in ein entsprechendes Innengewinde eingeschraubt ist, das an der Innenseite des Gehäuses oder des Prozessanschlusses angeordnet ist. Dabei ist mit Zone 0 ein Bereich definiert, in dem gefährliche explosionsfähige Atmosphäre als Gemisch aus Luft und brennbaren Gasen, Dämpfen oder Nebeln ständig, über lange Zeiträume oder häufig vorhanden ist, und mit Zone 1 ein Bereich, in dem sich bei Normalbetrieb gelegentlich eine gefährliche explosionsfähige Atmosphäre als Gemisch aus Luft und brennbaren Gasen, Dämpfen oder Nebeln bilden kann.

Die Erfindung geht des Weiteren davon aus, dass die Druckmesszelle prozessseitig angeordnet ist und sich damit infolge der durch die Trennwand realisierte Zonentrennung im kritischen Gefahrenbereich befindet.

Um Leitungsdurchführungen oder dergleichen für den Luftdurchgang durch die Trennwand zu vermeiden, die speziell gedichtet werden müssten, verläuft der Luftdurchgang in einer ersten Alternative über die zwischen der Trennwand und der Gehäuse- oder Prozessanschlussinnenseite gebildete Gewindeverbindung. In einer zweiten Alternative weist die Trennwand eine längsgerichtete Durchgangsbohrung mit einem Innengewinde auf und der Luftdurchgang verläuft dann über die zwischen dieser Durchgangsbohrung und einem darin eingeschraubten Gewindestift gebildete Gewindeverbindung.

Neben der Zonentrennung fordern die ATEX-Richtlinien auch, diesen Luftdurchgang im Bereich des Zonenübergangs flammendurchschlagsicher auszuführen, was sich durch ein spezielles Verhältnis von Durchmesser zu Länge eines entsprechenden Kanales oder dergleichen ergibt. Durch die Erfindung wird diese Forderung auf einfache Weise erfüllt, da mit dem Verlauf des Luftdurchgangs durch die Gewindeverbindung die notwendige Länge bei vergleichsweise kleinem Durchmesser gegeben ist.

Im Ergebnis ist nun durch die Erfindung Richtlinien-konform die Membran der Druckmesszelle über den Innenraum des Messgerätegehäuses, einer der besagten Gewindeverbindung bis zur Entlüftungsöffnung an der Außenseite des Gehäuses mit der Atmosphäre verbunden. Vorteilhafterweise ist dabei die Gewindeverbindung mit der Druckmesszelle durch wenigstens ein Kapillarröhrchen verbunden, so dass ein Druckausgleich nicht über einen reinen Volumenausgleich des Innenraums Messgerätegehäuses erfolgen muss, sondern über eine durchgehende Verbindung von der Membran der Druckmesszelle bis zur Entlüftungsöffnung an der Außenseite des Gehäuses.

Die Trennwand ist bevorzugt zumindest teilweise aus Metall ausgeführt, wobei grundsätzlich auch anderen Materialien wie Glas oder Keramik oder eine Kombination infrage kommen, wie bspw. ein äußerer Ring aus Metall und ein Mittelteil aus Glas oder Keramik.

In einer bevorzugten Ausbildung der Erfindung ist vorgesehen, dass die Trennwand durch den ohnehin vorhandenen Gewindering gebildet wird, der die Druckmesszelle zusammen mit dem prozessseitig angeordneten Halteelement axial einspannt.

In einer weiteren bevorzugten Ausführungsform der Erfindung ist vorgesehen, dass an der Trennwand Mittel zur induktiven Energieübertragung angeordnet sind, die zumindest zwei Spulen aufweist. Dadurch ist es möglich, Energie zum Betreiben der Druckmesszelle und ein den von der Druckmesszelle erfassten Druck repräsentierendes elektrisches Signal, d.h. Spannungssignal, Stromsignal oder moduliertes Signal, von einer Zone in die andere zu übertragen, ohne elektrische Leitungen dicht und Richtlinien-konform durch die Trennwand führen zu müssen. Bei einer metallischen Ausführung der Trennwand ergäbe sich ein weiterer Vorteil, da der häufig als Nachteil empfundene schlechte Wirkungsgrad bei einer induktiven Signal- bzw. Energieübertragung durch eine Metallwand hindurch vorliegend vorteilhaft ist, weil ansonsten Richtlinien-konform entsprechende Begrenzungselemente wie Drosseln der dergleichen notwendig wären.

Somit besteht der Vorteil der Erfindung darin, dass durch einfache konstruktive Maßnahmen eine Richtlinien-konforme Zonentrennung geschaffen werden kann. Nachfolgend wird die Erfindung anhand von Ausführungsbeispielen unter Bezugnahme auf die Zeichnungen näher erläutert.

Es zeigen schematisch:
- Figur 1: ein erfindungsgemäßes Druckmessgerät,
- Figur 2: einen Längsschnitt durch den Prozessanschluss eines ersten Ausführungsbeispiels des erfindungsgemäßen Druckmessgeräts,
- Figur 3: einen Längsschnitt durch den Prozessanschluss eines zweiten Ausführungsbeispiels des erfindungsgemäßen Druckmessgeräts,
- Figur 4: einen Längsschnitt durch den Prozessanschluss eines dritten Ausführungsbeispiels des erfindungsgemäßen Druckmessgeräts und
- Figur 5: einen Längsschnitt durch den Prozessanschluss eines nicht von den Ansprüchen umfassten Ausführungsbeispiels des erfindungsgemäßen Druckmessgeräts, welches nicht in den Schutzbereich der Ansprüche fällt.

Bei der nachfolgenden Beschreibung der bevorzugten Ausführungsformen bezeichnen gleiche Bezugszeichen gleiche oder vergleichbare Komponenten.

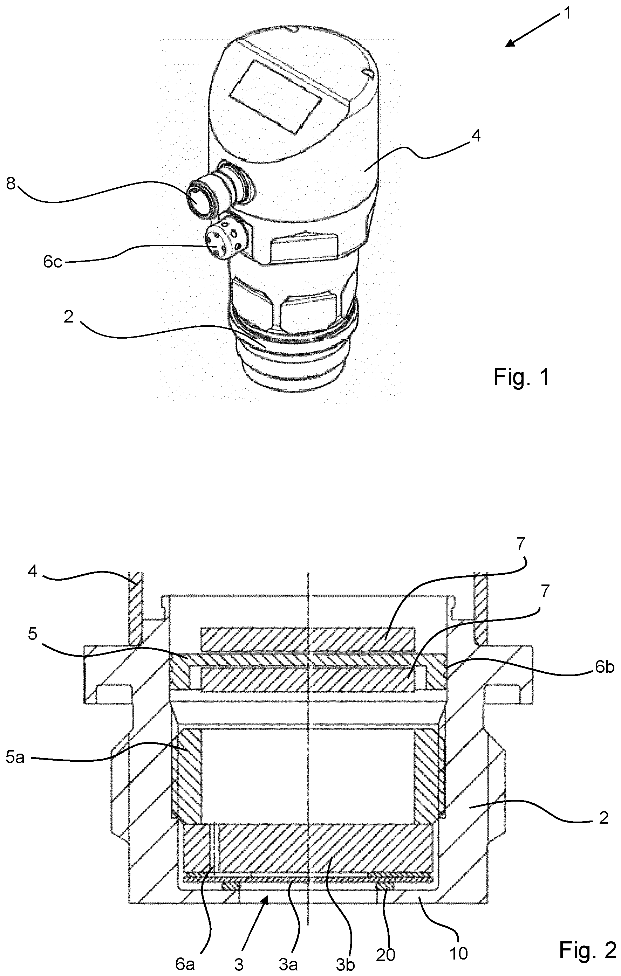

In Figur 1 ist ein erfindungsgemäßes Druckmessgerät 1 in einer perspektivischen Ansicht von außen dargestellt. Auf einem Prozessanschluss 2 ist ein Gehäuse 4 aufgesetzt. Über den Prozessanschluss 2 wird das Druckmessgerät 1 mit einem das zu messende Medium beinhaltenden Behälter, d.h. einer Rohrleitung, einem Tank oder dergleichen, verbunden. Zumeist erfolgt diese Verbindung mittels eines an den Behälter angeformten Flansches oder eines entsprechenden Adapters. Auf dem Gehäuse 4 befindet sich eine Anzeige- und Bedieneinheit, über die die Messergebnisse angezeigt werden und diverse Einstellungen durch das Bedienpersonal vorgenommen werden können, wie bspw. Festlegung eines Schaltpunkts oder Anzeige der Messwerte in verschiedenen Maßeinheiten. Ebenfalls von der Erfindung mit umfasst sind jedoch auch sogenannte Transmittergeräte, die keinerlei Anzeige- oder Bedieneinheit aufweisen und lediglich ein dem Messergebnis entsprechendes analoges Spannungs- oder Stromsignal ausgeben, das in einer übergeordneten Steuereinheit ausgewertet wird.

Seitlich am Gehäuse 4 ist ein Steckeranschluss 8 angeordnet, über den das Druckmessgerät 1 mit Energie versorgt wird und der als elektronische Schnittstelle fungierend die erzeugten Messsignale zur weiteren Verarbeitung der genannten Steuereinheit, bspw. einer SPS, zur Verfügung stellt. Weiterhin ist seitlich am Gehäuse 4 eine Entlüftungsöffnung 6c angeordnet, durch die zum Zwecke einer Relativdruckmessung ein Druckausgleich zwischen der Druckmesszelle 3 und der Umgebung erreicht wird.

In Figur 2 ist ein Längsschnitt durch den Prozessanschluss 2 eines ersten Ausführungsbeispiels des erfindungsgemäßen Druckmessgeräts 1 dargestellt. Auf dem Prozessanschluss 2 ist unmittelbar das Gehäuse 4 aufgesetzt und vorzugsweise miteinander verschweißt. Kernelelement des Druckmessgeräts 1 ist eine kapazitive Druckmesszelle 3 mit Membran 3a und Grundkörper 3b. Die Funktionsweise derartiger Druckmesszellen ist hinlänglich bekannt und bedarf daher keiner weiteren Erläuterungen. Die Druckmesszelle 3 liegt prozessseitig mit ihrer Membran 3a auf einem als Dichtsteg ausgebildeten umlaufenden Halteelement 10 auf. Auf der entgegengesetzten Seite der Druckmesszelle 3 stützt sich ein eingeschraubter Gewindering 5a auf dem Grundkörper 3b ab, so dass die Druckmesszelle 3 axial fest zwischen dem Gewindering 5a und dem Dichtsteg 10 eingespannt ist. Der Gewindering 5a liegt dabei vorteilhafterweise nicht vollumfänglich auf dem Grundkörper 3b auf, sondern er weist entsprechende Aussparungen auf, so dass er sich nur in voneinander beabstandeten Bereichen auf dem Grundkörper 3b abstützt. Um ein Eindringen des Messmediums in den Innenraum des Gehäuses 4 zu verhindern, ist zwischen dem nach innen ragendem Bereich des Haltelements 10 und der Druckmesszelle 3 bzw. der Membran 3a ein Dichtelement 20 angeordnet. Die Messsignale der Druckmesszelle 3 werden über eine nicht weiter gezeigte elektrische Leitung an eine im Gehäuse 4 des Messgeräts 1 angeordnete Elektronikeinheit übertragen und werden dort weiter aufbereitet und verarbeitet.

Um den bereits erwähnten Druckausgleich zwischen der Druckmesszelle 3 und der Umgebung zu erreichen, weist der Grundkörper 3b der Druckmesszelle 3 einen Entlüftungskanal 6a auf, so dass der Innenraum zwischen Membran 3a und Grundkörper 3b über diesen Entlüftungskanal 6a Verbindung mit dem Innenraum des Messgerätegehäuses 4 hat. Da der Innenraum des Messgerätegehäuses 4 über die in Fig. 1 gezeigte Entlüftungsöffnung 6c mit der Umgebung verbunden ist, ist somit eine Relativdruckmessung möglich.

Für den Einsatz des Messgeräts 1 in einer explosionsgefährdeten Umgebung sind nach den hierfür einschlägigen ATEX-Richtlinien einige bauliche Vorkehrungen zu treffen. Wesentlicher Teil dieser Richtlinien ist das Definieren von unterschiedliche Gefahrenbereiche kennzeichnenden Zonen innerhalb des Messgeräts 1 und eine strikte und definierte Abgrenzung dieser Zonen zueinander. Diese Zonentrennung wird in dem in Fig. 2 gezeigten ersten Ausführungsbeispiel durch eine Trennwand 5 realisiert. Durch diese Trennwand 5 wird nun die prozessseitig vorliegende Zone 0, in der gefährliche explosionsfähige Atmosphäre als Gemisch aus Luft und brennbaren Gasen, Dämpfen oder Nebeln ständig, über lange Zeiträume oder häufig vorhanden ist, von der im rückwärtigen Raum des Druckmessgeräts 1 vorliegende Zone 1, in der sich bei Normalbetrieb gelegentlich eine gefährliche explosionsfähige Atmosphäre als Gemisch aus Luft und brennbaren Gasen, Dämpfen oder Nebeln bilden kann, getrennt.

Da aber eine hermetische Abtrennung dieser beiden Zonen aufgrund des erwähnten Bedarfs eines Druckausgleichs nicht möglich ist und eine einfache Richtlinien-konforme Durchgangsbohrung durch die Trennwand 5 hindurch zu aufwendig ist, verläuft der Luftdurchgang von dem Entlüftungskanal 6a in der Druckmesszelle 3 über die zwischen der Trennwand 5 und der Gehäuseinnenseite gebildete Gewindeverbindung 6b zu der Entlüftungsöffnung 6c. Über die Gewindeverbindung 6b kann problemlos das von den Richtlinien geforderte Längen-DurchmesserVerhältnis geschaffen werden, so dass der Luftdurchgang an der Grenze zwischen den beiden Zonen die verlangte Flammendurchschlagssicherheit aufweist.

Des Weiteren sind mittig an der Trennwand 5 Mittel zur induktiven Energieübertragung in Form von zwei Spulen 7 angedeutet. Dadurch ist es möglich, Energie zum Betreiben der Druckmesszelle 3 und ein den von der Druckmesszelle 3 erfassten Druck repräsentierendes elektrisches Signal von einer Zone in die andere zu übertragen, ohne elektrische Leitungen dicht und Richtlinien-konform durch die Trennwand führen zu müssen.

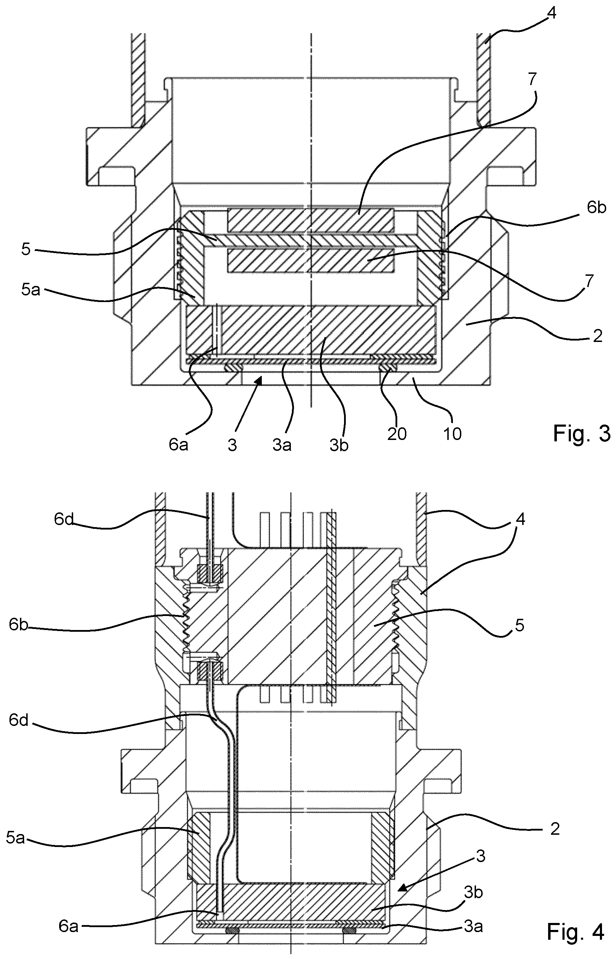

Das zweite Ausführungsbeispiel der Erfindung, das in Fig. 3 abgebildet ist, entspricht im Wesentlichen dem der Fig. 2, so dass zur Vermeidung von Wiederholungen auf die Ausführungen zu Fig. 2 verwiesen wird. Der Unterschied besteht darin, dass hier auf eine separate Trennwand verzichtet wurde und stattdessen der ohnehin wegen der axialen Einspannung der Druckmesszelle 3 vorhandene Gewindering 5a so ausgestaltet wird, dass er als Trennwand 5 fungiert und die verlangte Zonentrennung herstellt. Entsprechend erfolgt dann der Luftdurchgang über die zwischen dem Gewindering 5a und der Gehäuseinnenseite gebildete Gewindeverbindung 6b zu der Entlüftungsöffnung 6c. Eine Verbindung zwischen dem Entlüftungskanal 6a und der Gewindeverbindung 6b ist durch die zuvor erwähnten Aussparungen am Gewindering 5a gegeben.

Das dritte Ausführungsbeispiel der Erfindung, das in Fig. 4 abgebildet ist, unterscheidet sich zu den vorherigen darin, dass nunmehr die Gewindeverbindung 6b mit dem Entlüftungskanal 6a durch ein Kapillarröhrchen 6d verbunden ist. Oberhalb der Trennwand 5 ist ein weiteres Kapillarröhrchen 6d angedeutet, dass dann mit der Entlüftungsöffnung 6c an der Außenseite des Gehäuses 4 (nicht gezeigt) verbunden ist. Auf diese Weise erfolgt ein Druckausgleich nicht über einen reinen Volumenausgleich des Innenraums Messgerätegehäuses 4, sondern über eine durchgehende Verbindung von der Membran 3a der Druckmesszelle 3 bis zur Entlüftungsöffnung 6c. Die beiden Kapillarröhrchen 6d sind über jeweils ein Koppelelement, dass für die Befestigung und die erforderliche Abdichtung sorgt, mit der Oberseite bzw. Unterseite der Trennwand verbunden. Und zwar derart, dass jeweils eine direkte Verbindung zwischen dem Kapillarröhrchen 6d und der Gewindeverbindung 6b hergestellt ist, wie es der Darstellung in Fig. 4 zu entnehmen ist.

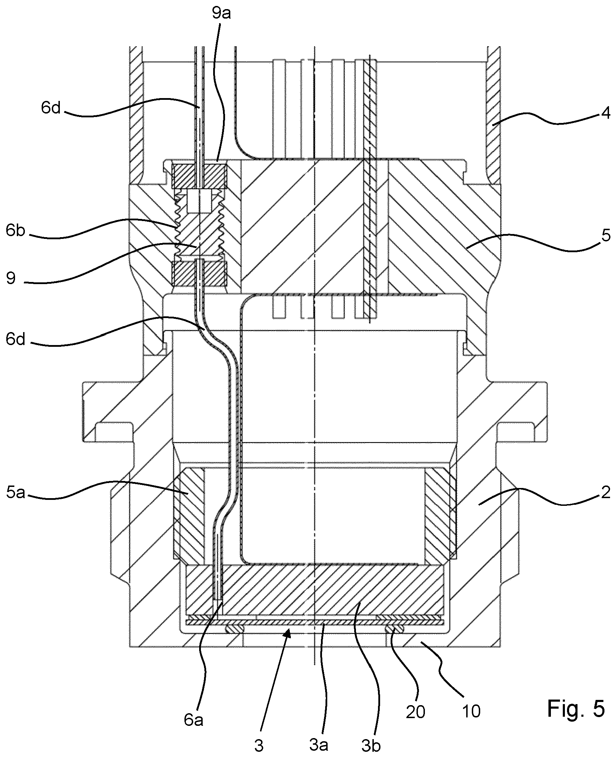

Ein nicht von den Ansprüchen umfasstes Ausführungsbeispiel der Erfindung, das in Fig. 5 abgebildet ist, unterscheidet sich zu den vorherigen darin, dass die Gewindeverbindung 6b nicht mehr durch die Trennwand 5 und der Innenseite des Gehäuse 4 gebildet wird, sondern durch einen Gewindestift 9, der in eine dafür vorgesehene Durchgangsbohrung 9a in der Trennwand 5 eingeschraubt ist. Der Gewindestift 9 kann dabei bspw. als Madenschraube ausgebildet sein. Die Trennwand 5 kann dann, wie in Fig. 5 dargestellt, auf dem Prozessanschluss 2 aufsetzend zwischen Prozessanschluss 2 und Gehäuse 4 angeordnet sein. Denkbar ist jedoch auch, dass die Trennwand in das Gehäuse 4 eingeschweißt ist. Im Übrigen ist auch in diesem Ausführungsbeispiel die Verbindung zwischen Druckmesszelle 3 und dem Gewindestift 9 sowie zwischen dem Gewindestift 9 und der Entlüftungsöffnung 6c an der Außenseite des Gehäuses 4 (nicht gezeigt) mittels jeweils eines Kapillarröhrchens 6d realisiert. Denkbar ist jedoch auch ein aus Fig. 2 und 3 bekannter Volumenausgleich.

### Bezugszeichenliste

- 1: Druckmessgerät
- 2: Prozessanschluss
- 3: Druckmesszelle
- 3a: Membran
- 3b: Grundkörper
- 4: Gehäuse
- 5: Trennwand
- 5a: Gewindering
- 6a: Entlüftungskanal
- 6b: Gewindeverbindung
- 6c: Entlüftungsöffnung
- 6d: Kapillarröhrchen
- 7: Mittel zur induktiven Energieübertragung; Spule
- 8: Steckeranschluss
- 9: Gewindestift, Madenschraube
- 9a: Durchgangsbohrung
- 10: Haltelement, Dichtsteg
- 20: Dichtelement

## Patentansprüche

1. Druckmessgerät (1) zur Erfassung des Drucks eines Mediums innerhalb eines Behälters oder einer Rohrleitung in einer explosionsgefährdeten Umgebung, mit einer eine Membran (3a) umfassende Druckmesszelle (3), einem die Druckmesszelle (3) aufnehmenden Prozessanschluss (2), einem auf dem Prozessanschluss (2) aufgesetzten Gehäuse (4) zur Aufnahme von Mitteln zur elektronischen Signalverarbeitung und einem flammendurchschlagsicheren Luftdurchgang (6a, 6b, 6c, 6d), der zum Zwecke einer Relativdruckmessung einen Druckausgleich zwischen der Druckmesszelle (3) und der Umgebung ermöglicht,
wobei im Inneren des Gehäuses (4) eine zur Längsachse des Druckmessgeräts (1) senkrecht verlaufende Trennwand (5, 5a) angeordnet ist, durch die der Gehäuseinnenraum in zwei Bereiche unterteilt ist und dabei eine dem Prozess zugewandte ersten Zone von einer zweiten Zone im Sinne der ATEX-Richtlinien abgetrennt ist, wobei die Druckmesszelle (3) in der ersten Zone angeordnet ist,
wobei die Trennwand (5, 5a) entweder ein umfänglich angeordnetes Außengewinde aufweist und in das ein entsprechendes Innengewinde aufweisende Gehäuse (4) eingeschraubt ist oder eine längsgerichtete Durchgangsbohrung (9a) mit einem Innengewinde aufweist, in die ein Gewindestift (9) eingeschraubt ist,
wobei die Flammendurchschlagsicherheit des Luftdurchgangs (6a, 6b, 6c, 6d) dadurch erreicht wird, indem der Luftdurchgang (6a, 6b, 6c, 6d) zumindest teilweise über die entweder zwischen der Trennwand (5, 5a) und der Gehäuseinnenseite oder zwischen der Trennwand (5, 5a) und dem Gewindestift gebildete Gewindeverbindung (6b) verläuft.

2. Druckmessgerät (1) zur Erfassung des Drucks eines Mediums innerhalb eines Behälters oder einer Rohrleitung in einer explosionsgefährdeten Umgebung, mit einer eine Membran (3a) umfassende Druckmesszelle (3), einem die Druckmesszelle (3) aufnehmenden Prozessanschluss (2), einem auf dem Prozessanschluss (2) aufgesetzten Gehäuse (4) zur Aufnahme von Mitteln zur elektronischen Signalverarbeitung und einem flammendurchschlagsicheren Luftdurchgang (6a, 6b, 6c, 6d), der zum Zwecke einer Relativdruckmessung einen Druckausgleich zwischen der Druckmesszelle (3) und der Umgebung ermöglicht,
wobei im Inneren des Prozessanschlusses (2) eine zur Längsachse des Druckmessgeräts (1) senkrecht verlaufende Trennwand (5, 5a) angeordnet ist, durch die der Prozessanschlussinnenraum in zwei Bereiche unterteilt ist und dabei eine dem Prozess zugewandte ersten Zone von einer zweiten Zone im Sinne der ATEX-Richtlinien abgetrennt ist, wobei die Druckmesszelle (3) in der ersten Zone angeordnet ist,
wobei die Trennwand (5, 5a) ein umfänglich angeordnetes Außengewinde aufweist und in das ein entsprechendes Innengewinde aufweisender Prozessanschluss (2) eingeschraubt ist,
wobei die Flammendurchschlagsicherheit des Luftdurchgangs (6a, 6b, 6c, 6d) dadurch erreicht wird, indem der Luftdurchgang (6a, 6b, 6c, 6d) zumindest teilweise über die zwischen der Trennwand (5, 5a) und der Prozessanschlussinnenseite gebildete Gewindeverbindung (6b) verläuft.

3. Druckmessgerät (1) nach Anspruch 1 oder 2,
wobei die Druckmesszelle (3) als kapazitive Druckmesszelle (3) ausgebildet ist und neben der Membran (3a) aus einem Grundkörper (3b) besteht.

4. Druckmessgerät (1) nach Anspruch 3,
wobei die Trennwand (5) durch einen auf dem Grundkörper (3b) der Druckmesszelle (3) aufliegenden Gewindering (5a) gebildet wird.

5. Druckmessgerät (1) nach Anspruch 3 oder 4,
wobei der Luftdurchgang (6a, 6b, 6c, 6d) neben der Gewindeverbindung (6b) auch durch einen Entlüftungskanal (6a) im Grundkörper (3b) der Druckmesszelle (3) verläuft.

6. Druckmessgerät (1) nach Anspruch 5,
wobei der Luftdurchgang (6a, 6b, 6c, 6d) des Weiteren durch wenigstens ein Kapillarröhrchen (6d) gebildet wird, welches die Gewindeverbindung (6b) mit dem Entlüftungskanal (6a) im Grundkörper (3b) der Druckmesszelle (3) verbindet.

7. Druckmessgerät (1) nach einem der vorhergehenden Ansprüche,
wobei der Prozessanschluss (2) ein Halteelement (10) umfasst, auf dem die Druckmesszelle (3) mit ihrer Membranseite (3a) in einem nach innen ragendem Bereich aufliegt, so dass die Druckmesszelle (3) im Zusammenwirken mit dem auf dem Grundkörper (3b) aufliegendem Gewindering (5) axial eingespannt ist.

8. Druckmessgerät (1) nach Anspruch 7,
wobei zwischen dem nach innen ragendem Bereich des Haltelements (10) und der Druckmesszelle (3) ein Dichtelement (20) angeordnet ist, um ein Eindringen des Messmediums in den Innenraum des Gehäuses (4) zu verhindern.

9. Druckmessgerät (1) nach einem der vorhergehenden Ansprüche,
wobei die erste Zone als Zone 0 und die zweite Zone als Zone 1 oder die erste Zone als Zone 1 und die zweite Zone als Zone 2 im Sinne der ATEX-Richtlinien ausgebildet ist.

10. Druckmessgerät (1) nach einem der vorhergehenden Ansprüche,
wobei an der Trennwand (5, 5a) Mittel zur induktiven Energieübertragung angeordnet sind, die zumindest zwei Spulen (7) aufweisen und dazu geeignet sind, durch die Trennwand (5, 5a) hindurch Energie zum Betreiben der Druckmesszelle (3) und ein von der Druckmesszelle (3) erfassten Druck als elektrisches Signal zu übertragen.

## Claims

1. Pressure measuring device (1) for recording the pressure of a medium inside a container or pipeline in a potentially explosive environment, the device having a pressure measuring cell (3) comprising a membrane (3a), a process connection (2) accommodating the pressure measuring cell (3), a housing (4), mounted on the process connection (2), for accommodating means for electronic signal processing, and a flameproof air passage (6a, 6b, 6c, 6d) which enables pressure compensation between the pressure measuring cell (3) and the environment for the purpose of measuring relative pressure,
wherein a partition (5, 5a) is arranged inside the housing (4), which partition extends perpendicularly to the longitudinal axis of the pressure measuring device (1) and by means of which partition the interior of the housing is divided into two regions and a first zone facing the process is separated from a second zone in accordance with the ATEX directives, wherein the pressure measuring cell (3) is arranged in the first zone,
wherein the partition (5, 5a) either has a circumferentially arranged external thread and is screwed into the housing (4), which has a corresponding internal thread, or has a longitudinally oriented through-hole (9a), which has an internal thread and into which a threaded stud (9) is screwed,
wherein the flameproofing of the air passage (6a, 6b, 6c, 6d) is achieved by the air passage (6a, 6b, 6c, 6d) extending at least partially over the threaded connection (6b) formed either between the partition (5, 5a) and the inside of the housing or between the partition (5, 5a) and the threaded stud.

2. Pressure measuring device (1) for recording the pressure of a medium inside a container or pipeline in a potentially explosive environment, the device having a pressure measuring cell (3) comprising a membrane (3a), a process connection (2) accommodating the pressure measuring cell (3), a housing (4), mounted on the process connection (2), for accommodating means for electronic signal processing, and a flameproof air passage (6a, 6b, 6c, 6d) which enables pressure compensation between the pressure measuring cell (3) and the environment for the purpose of measuring relative pressure,
wherein a partition (5, 5a) is arranged inside the process connection (2), which partition extends perpendicularly to the longitudinal axis of the pressure measuring device (1) and by means of which partition the interior of the process connection is divided into two regions and a first zone facing the process is separated from a second zone in accordance with the ATEX directives, wherein the pressure measuring cell (3) is arranged in the first zone,
wherein the partition (5, 5a) has a circumferentially arranged external thread and is screwed into the process connection (2), which has a corresponding internal thread,
wherein the flameproofing of the air passage (6a, 6b, 6c, 6d) is achieved by the air passage (6a, 6b, 6c, 6d) extending at least partially over the threaded connection (6b) formed between the partition (5, 5a) and the interior of the process connection.

3. Pressure measuring device (1) according to claim 1 or 2,
wherein the pressure measuring cell (3) is designed as a capacitive pressure measuring cell (3) and consists of a main body (3b) in addition to the membrane (3a).

4. Pressure measuring device (1) according to claim 3,
wherein the partition (5) is formed by a threaded ring (5a) which rests on the main body (3b) of the pressure measuring cell (3).

5. Pressure measuring device (1) according to claim 3 or 4,
wherein the air passage (6a, 6b, 6c, 6d) also extends through a vent channel (6a) in the main body (3b) of the pressure measuring cell (3) in addition to the threaded connection (6b).

6. Pressure measuring device (1) according to claim 5,
wherein the air passage (6a, 6b, 6c, 6d) is further formed by at least one capillary tube (6d) which connects the threaded connection (6b) to the vent channel (6a) in the main body (3b) of the pressure measuring cell (3).

7. Pressure measuring device (1) according to any of the preceding claims,
wherein the process connection (2) comprises a retaining element (10) on which the pressure measuring cell (3) rests with its membrane side (3a) in an inwardly projecting region so that the pressure measuring cell (3) is axially clamped in conjunction with the threaded ring (5) resting on the main body (3b).

8. Pressure measuring device (1) according to claim 7,
wherein a sealing element (20) is arranged between the inwardly projecting region of the retaining element (10) and the pressure measuring cell (3) to prevent the measuring medium from entering the interior of the housing (4).

9. Pressure measuring device (1) according to any of the preceding claims,
wherein the first zone is designed as zone 0 and the second zone as zone 1 or the first zone as zone 1 and the second zone as zone 2 in accordance with the ATEX directives.

10. Pressure measuring device (1) according to any of the preceding claims,
wherein means for inductive energy transmission are arranged on the partition (5, 5a), which have at least two coils (7) and are suitable for transmitting, through the partition (5, 5a), energy to operate the pressure measuring cell (3) and a pressure recorded by the pressure measuring cell (3) as an electrical signal.

## Revendications

1. Appareil de mesure de pression (1) permettant de détecter la pression d'un fluide à l'intérieur d'un récipient ou d'une conduite dans un environnement à risque d'explosion, comportant une cellule de mesure de pression (3) comprenant une membrane (3a), un raccord de processus (2) recevant la cellule de mesure de pression (3), un boîtier (4) placé sur le raccord de processus (2) et destiné à recevoir des moyens pour le traitement électronique de signaux et un passage d'air (6a, 6b, 6c, 6d) antiretour de flammes qui permet une compensation de pression entre la cellule de mesure de pression (3) et l'environnement dans le but d'une mesure de pression relative,
dans lequel une paroi de séparation (5, 5a) s'étendant perpendiculairement à l'axe longitudinal de l'appareil de mesure de pression (1) est disposée à l'intérieur du boîtier (4), au moyen de laquelle l'espace intérieur de boîtier est divisé en deux régions, et ainsi, une première zone tournée vers le processus est séparée d'une seconde zone au sens des directives ATEX, dans lequel la cellule de mesure de pression (3) est disposée dans la première zone,
dans lequel la paroi de séparation (5, 5a) présente soit un filetage extérieur disposé sur la périphérie et dans lequel un boîtier (4) présentant un filetage intérieur correspondant est vissé, soit un alésage traversant (9a) orienté longitudinalement comportant un filetage intérieur dans lequel est vissée une vis sans tête (9),
dans lequel la résistance au retour de flammes du passage d'air (6a, 6b, 6c, 6d) est obtenue par le fait que le passage d'air (6a, 6b, 6c, 6d) s'étend au moins partiellement sur la liaison filetée (6b) formée soit entre la paroi de séparation (5, 5a) et le côté intérieur de boîtier, soit entre la paroi de séparation (5, 5a) et la vis sans tête.

2. Appareil de mesure de pression (1) permettant de détecter la pression d'un fluide à l'intérieur d'un récipient ou d'une conduite dans un environnement à risque d'explosion, comportant une cellule de mesure de pression (3) comprenant une membrane (3a), un raccord de processus (2) recevant la cellule de mesure de pression (3), un boîtier (4) placé sur le raccord de processus (2) et destiné à recevoir des moyens pour le traitement électronique de signaux et un passage d'air (6a, 6b, 6c, 6d) antiretour de flammes qui permet une compensation de pression entre la cellule de mesure de pression (3) et l'environnement dans le but d'une mesure de pression relative,
dans lequel une paroi de séparation (5, 5a) s'étendant perpendiculairement à l'axe longitudinal de l'appareil de mesure de pression (1) est disposée à l'intérieur du raccord de processus (2), au moyen de laquelle l'espace intérieur de raccord de processus est divisé en deux régions, et ainsi, une première zone tournée vers le processus est séparée d'une seconde zone au sens des directives ATEX, dans lequel la cellule de mesure de pression (3) est disposée dans la première zone,
dans lequel la paroi de séparation (5, 5a) présente un filetage extérieur disposé sur la périphérie et dans lequel un raccord de processus (2) présentant un filetage intérieur correspondant est vissé,
dans lequel la résistance au retour de flammes du passage d'air (6a, 6b, 6c, 6d) est obtenue par le fait que le passage d'air (6a, 6b, 6c, 6d) s'étend au moins partiellement sur la liaison filetée (6b) formée entre la paroi de séparation (5, 5a) et le côté intérieur de raccord de processus.

3. Appareil de mesure de pression (1) selon la revendication 1 ou 2,
dans lequel la cellule de mesure de pression (3) est conçue comme une cellule de mesure de pression capacitive (3) et est constituée, outre la membrane (3a), d'un corps de base (3b).

4. Appareil de mesure de pression (1) selon la revendication 3,
dans lequel la paroi de séparation (5) est formée par une bague filetée (5a) reposant sur le corps de base (3b) de la cellule de mesure de pression (3).

5. Appareil de mesure de pression (1) selon la revendication 3 ou 4,
dans lequel le passage d'air (6a, 6b, 6c, 6d) s'étend, outre la liaison filetée (6b), également à travers un canal d'aération (6a) dans le corps de base (3b) de la cellule de mesure de pression (3).

6. Appareil de mesure de pression (1) selon la revendication 5,
dans lequel le passage d'air (6a, 6b, 6c, 6d) est en outre formé par au moins un tube capillaire (6d) qui relie la liaison filetée (6b) au canal d'aération (6a) dans le corps de base (3b) de la cellule de mesure de pression (3).

7. Appareil de mesure de pression (1) selon l'une des revendications précédentes,
dans lequel le raccord de processus (2) comprend un élément de maintien (10) sur lequel la cellule de mesure de pression (3) repose avec son côté membrane (3a) dans une région dépassant vers l'intérieur, de sorte que la cellule de mesure de pression (3) est serrée axialement en coopération avec la bague filetée (5) reposant sur le corps de base (3b).

8. Appareil de mesure de pression (1) selon la revendication 7,
dans lequel un élément d'étanchéité (20) est disposé entre la région de l'élément de maintien (10) dépassant vers l'intérieur et la cellule de mesure de pression (3) afin d'empêcher une pénétration du milieu de mesure dans l'espace intérieur du boîtier (4).

9. Appareil de mesure de pression (1) selon l'une des revendications précédentes,
dans lequel la première zone est conçue comme zone 0 et la seconde zone est conçue comme zone 1 ou la première zone est conçue comme zone 1 et la seconde zone est conçue comme zone 2 au sens des directives ATEX.

10. Appareil de mesure de pression (1) selon l'une des revendications précédentes,
dans lequel des moyens pour la transmission d'énergie par induction sont disposés sur la paroi de séparation (5, 5a), lesquels présentent au moins deux bobines (7) et sont aptes à transmettre, à travers la paroi de séparation (5, 5a), de l'énergie pour faire fonctionner la cellule de mesure de pression (3) et une pression détectée par la cellule de mesure de pression (3) sous forme de signal électrique.
